# EUROPEAN PATENT APPLICATION

(11) **EP 4 535 865 A1**
(43) Date of publication of application: **09.04.2025**
(21) Application number: 23834766.0
(22) Date of filing: 30.06.2023
(51) Int. Cl.: H04W 36/00

(54) **CONDITIONAL HANDOVER METHOD, INFORMATION TRANSMISSION METHOD, PROCESSING METHOD, AND APPARATUS AND DEVICE**

(30) Priority: 05.07.2022 CN 202210792461
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: XIE, Fang, Beijing 100032 (CN)
(74) Representative: Murgitroyd & Company
(86) International application number: PCT/CN2023/104931
(87) International publication number: WO 2024/007999

(57) **Abstract**

The present disclosure provides a conditional handover method, an information transmission method, an information processing method, device and equipment. The conditional handover method is performed by a user equipment (UE) which is connected to a primary cell (PCell) and a primary secondary cell (PSCell). The method includes: in a case where there is a target primary cell (PCell) that meets a first handover event and a PSCell that meets a second handover event, performing a conditional handover procedure from the source PCell to the target PCell.

## Description

### CROSS-REFERENCE TO RELATED APPLICATION

The present application is filed based on and claims the priority of Chinese Application No. 202210792461.1 filed on July 5, 2022, the disclosure of which are incorporated in their entireties by reference herein.

### TECHNICAL FIELD

The present disclosure relates to the field of communication technologies, and in particular to a conditional handover method, information transmission method and processing method, device and equipment.

### BACKGROUND

Conditional Handover (CHO) is a mechanism to enhance robustness of the handover procedure. The conditional handover mode in a dual-connectivity scenario in the related art may lead to a reduction in the service experience of user equipment (UE).

### SUMMARY

An object of the present disclosure is to provide a conditional handover method, information transmission method and processing method, device and equipment, which can avoid the problem of reduced service experience of UEs caused by conditional handover in dual-connectivity scenarios, and improve the service experience of UEs.

In order to achieve the above object, in a first aspect, the present disclosure provides a conditional handover method, performed by a user equipment (UE) which is connected to a primary cell (PCell) and a primary secondary cell (PSCell), the method including:
in a case where there is a target primary cell (PCell) that meets a first handover event and a PSCell that meets a second handover event, performing a conditional handover procedure from the source PCell to the target PCell.

Optionally, the method further includes:
receiving first configuration information and second configuration information of conditional handover sent by a network device; wherein the first configuration information is configuration information used to indicate the first handover event that the target PCell needs to meet when performing PCell conditional handover, and the second configuration information is configuration information used to indicate a second handover event that PSCell needs to meet;
determining the target PCell that meets the first handover event according to the first configuration information;
determining whether the PSCell meets the second handover event according to the second configuration information.

Optionally, the first configuration information includes one or more candidate target PCells, the first handover event for triggering conditional handover corresponding to each candidate target PCell, and/or a threshold value corresponding to the first handover event;
wherein the determining the target PCell that meets the first handover event according to the first configuration information, includes:
according to the first configuration information, selecting a first candidate target PCell that meets the corresponding first handover event from the one or more candidate target PCells;
determining the first candidate target PCell as the target PCell.

Optionally, the second configuration information includes the second handover event for triggering conditional handover corresponding to the PSCell and/or a threshold value corresponding to the second handover event.

Optionally, the first handover event includes A3 event and/or A5 event; the second handover event is A2 event or the A4 event or a first event, and the first event is a newly defined event.

Optionally, the first configuration information and the second configuration information are configured by a primary node, or the first configuration information is configured by the primary node and the second configuration information is configured by a secondary node.

In a second aspect, the present disclosure further provides an information transmission method, performed by a network device, including:
sending first configuration information and second configuration information of conditional handover to a user equipment (UE); wherein the first configuration information is configuration information used to indicate a first handover event that a target PCell needs to meet when performing PCell conditional handover; the second configuration information is configuration information used to indicate a second handover event that a PSCell needs to meet.

Optionally, the first configuration information includes one or more candidate target PCells, the first handover event for triggering conditional handover corresponding to each candidate target PCell, and/or a threshold value corresponding to the first handover event; and the second configuration information includes the second handover event for triggering conditional handover corresponding to PSCell and/or a threshold value corresponding to the second handover event.

Optionally, the first handover event includes A3 event and/or A5 event; the second handover event is A2 event or A4 event or a first event, and the first event is a newly defined event.

Optionally, the network device includes a primary node and/or a secondary node.

In a third aspect, the present disclosure further provides an information transmission method, executed by a user equipment (UE), includes:
sending first information related to success or failure of conditional handover to a network device;
wherein the first information includes at least one of the following:
   relevant identifier of cell that triggers conditional handover;
   handover event or events that trigger conditional handover;
   a threshold value or values corresponding to handover event or events that trigger conditional handover;
   network device that configures conditional handover for UE;
   a first time difference which is a difference between a moment when the UE receives the configuration information of the conditional handover and a moment when a handover event of the conditional handover is met;
   relevant event information that the handover event or events that trigger the conditional condition is met;
   a second time difference which is a difference between a moment when a handover event for triggering conditional handover corresponding to the PCell is met and a moment when a handover event for triggering conditional handover corresponding to the PSCell is met.

Optionally, the method further includes:
receiving the first configuration information and the second configuration information of the conditional handover sent by the network device; wherein the first configuration information is configuration information used to indicate the first handover event that the target PCell needs to meet when performing the PCell conditional handover.; the second configuration information is configuration information used to indicate the second handover event that PSCell needs to meet.

Optionally, the first configuration information includes one or more candidate target PCells, a first handover event for triggering conditional handover corresponding to each candidate target PCell, and/or a threshold value corresponding to the first handover event. The second configuration information includes a second handover event for triggering conditional handover corresponding to the PSCell and/or a threshold value corresponding to the second handover event.

In a fourth aspect, the present disclosure further provides an information processing method, performed by a network device, including:
receiving first information sent by a user equipment (UE);
adjusting, according to the first information, configuration information of conditional handover configured for the UE;
wherein the first information includes at least one of the following:
   relevant identifier of cell that triggers conditional handover;
   handover event or events that trigger conditional handover;
   a threshold value or values corresponding to handover event or events that trigger conditional handover;
   network device that configures conditional handover for UE;
   a first time difference which is a difference between a moment when the UE receives the configuration information of the conditional handover and a moment when a handover event of the conditional handover is met;
   relevant event information that the handover event or events that trigger the conditional condition is met;
   a second time difference which is a difference between a moment when a handover event for triggering conditional handover corresponding to the PCell is met and a moment when a handover event for triggering conditional handover corresponding to the PSCell is met.

Optionally, the method further includes:
sending first configuration information and second configuration information of conditional handover to the UE; wherein the first configuration information is configuration information used to indicate the first handover event that the target PCell needs to meet when performing the PCell conditional handover, and the second configuration information is configuration information used to indicate the second handover event that PSCell needs to meet.

Optionally, the first configuration information includes one or more candidate target PCells, the first handover event for triggering conditional handover corresponding to each candidate target PCell, and/or a threshold value corresponding to the first handover event; the second configuration information includes the second handover event for triggering conditional handover corresponding to the PSCell and/or a threshold value corresponding to the second handover event.

In a fifth aspect, the present disclosure further provides a conditional handover device, performed by a user equipment (UE) which is connected to a source primary cell (PCell) and a primary secondary cell (PSCell), including:
a handover module configured to, in a case where there is a target primary cell (PCell) that meets a first handover event and a PSCell that meets a second handover event, perform a conditional handover procedure from the source PCell to the target PCell.

In a sixth aspect, the present disclosure further provides an information information transmission device, performed by a network device, including:
a first sending module configured to send first configuration information and second configuration information of conditional handover to a user equipment (UE); wherein the first configuration information is configuration information used to indicate a first handover event that a target PCell needs to meet when performing PCell conditional handover; the second configuration information is configuration information used to indicate a second handover event that a PSCell needs to meet.

In a seventh aspect, the present disclosure further provides an information transmission device, performed by a user equipment (UE), including:
a second sending module configured to send first information related to success or failure of conditional handover to a network device;
wherein the first information includes at least one of the following:
   relevant identifier of cell that triggers conditional handover;
   handover event or events that trigger conditional handover;
   a threshold value or values corresponding to handover event or events that trigger conditional handover;
   network device that configures conditional handover for UE;
   a first time difference which is a difference between a moment when the UE receives the configuration information of the conditional handover and a moment when a handover event of the conditional handover is met;
   relevant event information that the handover event or events that trigger the conditional condition is met;
   a second time difference which is a difference between a moment when a handover event for triggering conditional handover corresponding to the PCell is met and a moment when a handover event for triggering conditional handover corresponding to the PSCell is met.

In an eighth aspect, the present disclosure further provides an information processing device, performed by a network device, including:
a third receiving module configured to receive first information sent by a user equipment (UE);
a third processing module configured to adjust, according to the first information, configuration information of conditional handover configured for the UE;
wherein the first information includes at least one of the following:
   relevant identifier of cell that triggers conditional handover;
   handover event or events that trigger conditional handover;
   a threshold value or values corresponding to handover event or events that trigger conditional handover;
   network device that configures conditional handover for UE;
   a first time difference which is a difference between a moment when the UE receives the configuration information of the conditional handover and a moment when a handover event of the conditional handover is met;
   relevant event information that the handover event or events that trigger the conditional condition is met;
   a second time difference which is a difference between a moment when a handover event for triggering conditional handover corresponding to the PCell is met and a moment when a handover event for triggering conditional handover corresponding to the PSCell is met.

In a ninth aspect, the present disclosure further provides a user equipment (UE) in connection with a source primary cell (PCell) and a primary secondary cell (PSCell), including: a processor and a transceiver; wherein the transceiver receives and sends data under control of the processor, and the processor is used to perform following actions:
in a case where there is a target primary cell (PCell) that meets a first handover event and a PSCell that meets a second handover event, performing a conditional handover procedure from the source PCell to the target PCell.

**In** a tenth aspect, the present disclosure further provides a network device, including a processor and a transceiver; wherein the transceiver receives and sends data under control of the processor, and the processor is used to perform following process:
sending, through transceiver, first configuration information and second configuration information of conditional handover to a user equipment (UE); wherein the first configuration information is configuration information used to indicate a first handover event that a target PCell needs to meet when performing PCell conditional handover; the second configuration information is configuration information used to indicate a second handover event that a PSCell needs to meet.

In an eleventh aspect, the present disclosure further provides a user equipment (UE), including: a processor and a transceiver; wherein the transceiver receives and sends data under control of the processor, and the processor is used to perform following process:
sending, through transceiver, first information related to success or failure of conditional handover to a network device;
wherein the first information includes at least one of the following:
   relevant identifier of cell that triggers conditional handover;
   handover event or events that trigger conditional handover;
   a threshold value or values corresponding to handover event or events that trigger conditional handover;
   network device that configures conditional handover for UE;
   a first time difference which is a difference between a moment when the UE receives the configuration information of the conditional handover and a moment when a handover event of the conditional handover is met;
   relevant event information that the handover event or events that trigger the conditional condition is met;
   a second time difference which is a difference between a moment when a handover event for triggering conditional handover corresponding to the PCell is met and a moment when a handover event for triggering conditional handover corresponding to the PSCell is met.

In a twelfth aspect, the present disclosure further provides a network device, including: a processor and a transceiver; wherein the transceiver receives and sends data under control of the processor, and the processor is used to perform following process:
receiving, through the transceiver, first information sent by a user equipment (UE);
adjusting, according to the first information, configuration information of conditional handover configured for the UE;
wherein the first information includes at least one of the following:
   relevant identifier of cell that triggers conditional handover;
   handover event or events that trigger conditional handover;
   a threshold value or values corresponding to handover event or events that trigger conditional handover;
   network device that configures conditional handover for UE;
   a first time difference which is a difference between a moment when the UE receives the configuration information of the conditional handover and a moment when a handover event of the conditional handover is met;
   relevant event information that the handover event or events that trigger the conditional condition is met;
   a second time difference which is a difference between a moment when a handover event for triggering conditional handover corresponding to the PCell is met and a moment when a handover event for triggering conditional handover corresponding to the PSCell is met.

In a thirteenth aspect, the present disclosure further provides a user equipment (UE), including: a memory, a processor, and a program stored on the memory and executable on the processor; wherein the processor executes the program to perform the conditional handover method according to the first aspect, or perform the information transmission method according to the third aspect.

In a fourteenth aspect, the present disclosure further provides a network device, including: a memory, a processor, and a program stored on the memory and executable on the processor; wherein the processor executes the program to perform the information transmission method according to the second aspect, or perform the information processing method according to the fourth aspect.

In a fifteenth aspect, the present disclosure further provides a computer-readable storage medium, including a computer program stored thereon; wherein the program, when executed by a processor, causes the processor to perform the steps in the conditional handover method according to the first aspect, or perform steps in the information transmission method according to the second aspect, or perform steps in the information transmission method according to the third aspect, or perform the information processing method according to the fourth aspect.

The above technical solution in the present disclosure has at least the following beneficial effects.

In the embodiment of the present disclosure, when there is a target primary cell PCell that meets the first handover event, and the PSCell meets the second handover event, the UE connected to the source primary cell PCell and the primary secondary cell PSCell, performs conditional handover procedure from the source PCell to the target PCell. In this way, in a dual-connectivity scenario, in addition to considering the triggering event of the primary cell, the UE also needs to consider the triggering event of the primary secondary cell, the UE performs primary cell conditional handover only when both conditions are met, i.e., performing the conditional handover procedure from the source PCell to the target PCell, thereby avoiding the problem of reduced service experience of the UE due to conditional handover in dual-connectivity scenarios, and improving service experience of the UE.

### BRIEF DESCRIPTION OF THE DRAWINGS

FIG. 1 is a schematic flowchart of a conditional handover method according to an embodiment of the present disclosure;
FIG. 2 is a first schematic flowchart of an information transmission method according to an embodiment of the present disclosure;
FIG. 3 is a second schematic flowchart of an information transmission method according to an embodiment of the present disclosure;
FIG. 4 is a schematic flowchart of an information processing method according to an embodiment of the present disclosure;
FIG. 5 is a schematic diagram showing modules of a condition handover device according to an embodiment of the present disclosure;
FIG. 6 is a first schematic diagram showing modules of an information transmission device according to an embodiment of the present disclosure;
FIG. 7 is a second schematic diagram showing modules of an information transmission device according to an embodiment of the present disclosure;
FIG. 8 is a schematic diagram showing modules of an information processing device according to an embodiment of the present disclosure;
FIG. 9 is a first schematic diagram showing hardware structure of a user equipment according to an embodiment of the present disclosure;
FIG. 10 is a second schematic diagram showing hardware structure of a network equipment according to an embodiment of the present disclosure;
FIG. 11 is a second schematic diagram showing hardware structure of a user equipment according to an embodiment of the present disclosure; and
FIG. 12 is a second schematic diagram showing hardware structure of a network equipment according to an embodiment of the present disclosure.

### DETAILED DESCRIPTION

In order to make technical problems to be solved, technical solutions and advantages of the present disclosure clearer, a detailed description will be given hereinafter with reference to the accompanying drawings and specific embodiments.

In the related conditional handover mechanism, when radio connection quality between a user equipment (UE) and a serving cell is relatively good, a base station can configure, based on the UE's measurement report, for the UE, a conditional handover command, which carries an event of UE's spontaneous handover, such as A3 and/or A5 events, and which can also carry random access resources used by the UE in a target cell, etc.

Once the UE finds that the conditional handover event is met, the UE autonomously initiates a random access procedure to a target base station or cell. In this way, it can be avoided that when the channel between the UE and the serving cell suddenly deteriorates (especially for high-frequency deployment or when the UE moves at high speed), the UE cannot successfully receive a handover (HO) command sent by the serving base station, resulting that the UE is unable to complete the handover procedure normally; and then the robustness of the handover procedure is improved.

In a dual-connectivity scenario, a secondary cell group (SCG) is usually used to provide high-rate data services for UEs. When performing conditional handover in a dual-connectivity scenario in the related art, the triggering event (such as the A3/A5 event) of CHO is configured only based on measurement information of PCell or Master Cell Group (MCG), without considering situations of the PSCell or SCG. In this way, the conditional handover of PCell may be triggered when the quality of PScell is relatively good, resulting interruption of the high-rate data service of the UE; alternatively, after handover to a new PCell, the current PSCell and the new PCell cannot perform dual-connectivity (the current PSCell and the new PCell may not be able to perform dual-connectivity), thus affecting the service experience of the UE after handover.

In order to solve the above problems, the present disclosure provides a conditional handover method, information transmission method and processing method, device and equipment.

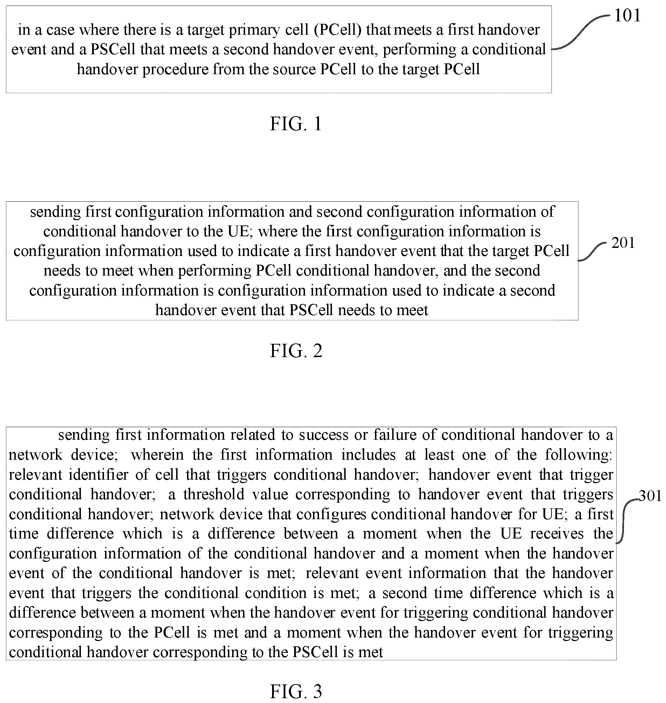

As shown in FIG. 1, it is a schematic flowchart of a conditional handover method according to an embodiment of the present disclosure. This method is performed by a user equipment (UE), where the UE is connected to a source primary cell (PCell) and a primary secondary cell (PSCell), respectively. That is, the UE is in a dual-connectivity scenario. The method may specifically include the following steps.

Step 101: in a case where there is a target primary cell (PCell) that meets a first handover event and a PSCell that meets a second handover event, performing a conditional handover procedure from the source PCell to the target PCell.

It is to be noted that the PCell mentioned in the present disclosure can also be understood as MCG or Master Node (MN), and the PSCell can also be understood as SCG or Secondary Node (SN).

In the embodiment of the present disclosure, a neighboring cell specifically refers to a PCell adjacent to a serving cell. The serving cell specifically refers to a cell (PCell and/or PSCell) to which the UE is currently accessed.

The above conditional handover procedure from the source PCell to the target PCell can also be a process of executing conditional configuration of the target PCell or PScell.

Optionally, the first handover event includes A3 event and/or A5 event; the second handover event is A2 event or the A4 event or a first event, and the first event is a newly defined event.

Here, the A3 event refers to that a signal quality of a neighboring cell is higher than a certain threshold of a signal quality of a serving cell. In this embodiment, the serving cell involved in the A3 event is the PCell to which the UE is currently accessed.

The A5 event refers to that the signal quality of the serving cell is lower than a certain threshold and the signal quality of the neighboring cell is higher than a certain threshold. In this embodiment, the serving cell involved in the A5 event is the PCell to which the UE is currently accessed.

The A2 event refers to that the signal quality of the serving cell is lower than a certain threshold. In this embodiment, the serving cell involved in the A2 event is the PSCell to which the UE is currently accessed.

The A4 event refers to that the signal quality of the neighboring cell is higher than a certain threshold.

The first event refers to that a first preset parameter of the UE in PSCell or SCG is lower than a certain threshold, where the first preset parameter includes but is not limited to data rate, throughput, and bandwidth. Alternatively, the first event refers to that a second preset parameter of the UE for transmitting data packet through PSCell or SCG, is higher than a certain threshold, where the second preset parameter includes but is not limited to delay, retransmission times (such as radio link control (RLC) retransmission times), packet loss rate.

It is to be noted that if PSCell meets the first event, it means that the service quality provided by SN or SCG or PSCell to the UE is not high, such as the data rate is not high or the data packet delay is too high, or the of retransmission times is too high, or packet loss rate is high.

Based on this, if there is a target PCell that meets the first handover event, it means that a signal quality of the target PCell is higher than a certain threshold of the signal quality of the serving cell; and the PSCell meets the second handover event, it means that the service quality provided by the serving PSCell for the UE is not high (corresponding to the A2 event) or there is an adjacent PSCell with particularly good quality (corresponding to the A4 event), then the conditional handover procedure from the source PCell to the target PCell can be triggered.

If there is a target PCell that meets the first handover event, but the PSCell does not meet the second handover event, that is, the signal quality of the current PCell servicing the UE is poor, but the service quality of the PSCell servicing the UE is good or a particularly good target or adjacent PSCell has not been found. Since the PCell servicing the UE mainly carries signaling, and the signaling transmission is not continuous, the poor signal quality of the PCell has little impact on the signaling transmission. As long as the service quality of the PSCell is good, the PSCell can also provide high-speed data services for the UE. At this point, the conditional handover procedure from the source PCell to the target PCell may not be performed. This can reduce handover of the UE and allow the UE to use the high-speed data services provided by PSCell or SCG as much as possible, thereby achieving the purpose of improving the service experience of the UE.

As an optional implementation manner, before the step 101, the method of the embodiment of the present disclosure may further include:
S11: receiving first configuration information and second configuration information of conditional handover sent by a network device. The first configuration information is configuration information used to indicate a first handover event that the target PCell needs to meet when performing PCell conditional handover. The second configuration information is configuration information used to indicate a second handover event that PSCell needs to meet.

It is to be noted that the UE may receive one piece of information, which includes the first configuration information and the second configuration information, or may receive two pieces of information, one piece of information including the first configuration information, and the other piece of information including the second configuration information.

Here, the network device configures the first configuration information and the second configuration information of conditional handover for the UE, so that the UE determines a target PCell that meets the first handover event based on the first configuration information, and determines whether the PSCell meets the second handover event based on the second configuration information.

The first configuration information may include a configured specific handover event for triggering conditional condition, a threshold value corresponding to the handover event. The second configuration information may include a configured specific handover event for triggering conditional condition, and a threshold value corresponding to the handover event.

S12: determining a target PCell that meets the first handover event according to the first configuration information.

Optionally, the first configuration information includes one or more candidate target PCells, a first handover event for triggering conditional handover corresponding to each candidate target PCell, and/or a threshold value corresponding to the first handover event.

Correspondingly, the step S12 may include:
S121: according to the first configuration information, selecting a first candidate target PCell that meets the corresponding first handover event from the one or more candidate target PCells.

Specifically, the UE performs cell measurements on the serving cell and one or more candidate target PCells (neighboring cells) around the serving cell, and obtains measurement results; According to the measurement results and the first configuration information, the UE selects a first candidate target PCell that meets the corresponding first handover event from one or more candidate target PCells.

It is to be noted that the measurement results include a signal quality of PCell servicing the UE, a parameter value representing the service quality of the PSCell servicing the UE, and a signal quality of one or more candidate target PCells.

S122: determining the first candidate target PCell as the target PCell.

Since the first candidate target PCell meets the corresponding first handover event, the first candidate target PCell is the target PCell.

S13: determining whether the PSCell meets the second handover event according to the second configuration information.

Optionally, the second configuration information includes a second handover event for triggering conditional handover corresponding to the PSCell and/or a threshold value corresponding to the second handover event.

In the above step S121, the UE performs cell measurement on the serving cell and one or more candidate target PCells (neighboring cells) around the serving cell, and obtains measurement results. The measurement results include a signal quality of the PCell servicing the UE, a parameter value representing the service quality of the PSCell servicing the UE and a signal quality of one or more candidate target PCells.

This step may specifically include: determining whether the PScell meets the second handover event according to the parameter value representing the service quality of the PSCell servicing the UE and the second configuration information.

In an example, if the second handover event is an A2 event, correspondingly, if the signal quality of the PSCell is less than a threshold of the A2 event, it is determined that the PScell meets the A2 event.

In another example, if the second handover event is an A4 event, correspondingly, if a signal quality of an adjacent or target PSCell is higher than a threshold of the A4 event, it is determined that the adjacent or target PScell meets the A4 event.

In another example, if the second handover event is an A3 event, correspondingly, if a signal quality of an adjacent or target PSCell is higher than a threshold of the A3 event compared to the serving PSCell, it is determined that the adjacent or target PScell meets the A3 event.

In another example, if the second handover event is the A5 event, correspondingly, if the signal quality of the serving PSCell is lower than a certain threshold, and the signal quality of the adjacent or target PSCell is higher than another threshold, then it is determined that the adjacent or target PScell meets the A5 event.

Optionally, the target PSCell and the target PCell can perform dual-connectivity, that is, the UE can perform dual-connectivity after switching to PCell and PSCell.

In addition, the conditional handover of PSCell can also be expressed as conditional PSCell change (CPC).

In another example, if the second handover event is the first event, where the first event refers to that the first preset parameter of the UE in PSCell or SCG is lower than a certain threshold, then correspondingly, if the first preset parameter of the UE in PSCell or SCG is lower than a threshold value of the first event, it is determined that PSCell meets the first event.

In another example, if the second handover event is the first event, where the first event refers to that the second preset parameter of the UE for transmitting the data packet through PSCell or SCG is higher than a certain threshold, then correspondingly, if the second preset parameter of the UE for transmitting the data packet through PSCell or SCG is higher than the threshold value of the first event, it is determined that the PSCell meets the first event.

Optionally, the first configuration information and the second configuration information are configured by the primary node, or the first configuration information is configured by the primary node and the second configuration information is configured by the secondary node. The primary node and the secondary node are network devices.

Here, the first configuration information and the second configuration information may be configured independently by the MN, or may be configured jointly by the MN and the SN.

Further, in the case where the first configuration information and the second configuration information are jointly configured by the MN and the SN, the first configuration information is configured by the MN, and the second configuration information is configured by the SN.

Here, the technical advantage of configuring the second configuration information by the SN is that the SCG's own load requirement can be considered to configure the threshold corresponding to the second handover event for the UE. For example, if the second handover event is an A2 event, when the SCG load is high, a higher A2 event threshold can be configured for the UE, so that the UE can easily trigger conditional handover; otherwise, a lower A2 event threshold can be configured, so that the UE can reside in the current serving cell as much as possible without triggering conditional handover. For another example, if the second handover event is the first event, where the first event refers to that the first preset parameter of the UE in PSCell or SCG is lower than a certain threshold, then when the load of the SCG is high, a higher first event threshold can be configured for the UE, so that the UE can easily trigger conditional handover; otherwise, a lower first event threshold can be configured for the UE, so that the UE can reside in the current serving cell as much as possible without triggering conditional handover. For another example, if the second handover event is the first event, where the first event refers to that the second preset parameter of the UE for transmitting data packets through PSCell or SCG is higher than a certain threshold, when the load of SCG is high, a lower first event threshold is configured for the UE, so that the UE can easily trigger conditional handover; otherwise, a higher first event threshold can be configured for the UE, so that the UE can reside in the current serving cell as much as possible without triggering conditional handover.

As an optional implementation, the step S11 may specifically include:
Step S111a: receiving the first configuration information and the second configuration information of the conditional handover sent by the MN.

In this implementation, for the MN side, the first configuration information and the second configuration information may be independently configured by the MN and sent to the UE by the MN; or, the first configuration information and the second configuration information may be jointly configured by the MN and the SN, the SN sends the second configuration information to the MN after the SN completes the configuration of the second configuration information, and the MN sends the first configuration information and the second configuration information to the UE.

As another optional implementation, the step S11 may specifically include:
Step S111b: receiving the first configuration information sent by the MN;
Step S112b: receiving the second configuration information sent by the SN.

This implementation corresponds to the situation where the first configuration information and the second configuration information are jointly configured by the MN and the SN, and the MN configures the first configuration information and the SN configures the second configuration information.

As an optional implementation manner, before the step S11, the method in the embodiment of the present disclosure may further include:
S10: sending a measurement report to the master node, where the measurement report is used to trigger the network device to configure conditional handover configuration information for the UE.

It is to be noted that the MN decides to configure the first configuration information and the second configuration information of conditional handover for the UE according to the measurement report sent by the UE. Alternatively, the MN decides to configure the first configuration information for the UE based on the measurement report sent by the UE, and notifies the SN to configure the second configuration information for the UE, or no notification is required and the SN itself decides to configure the second configuration information for the UE.

In the conditional handover method of the embodiment of the present disclosure, when there is a target primary cell PCell that meets the first handover event, and the PSCell meets the second handover event, the UE connected to the source primary cell PCell and the primary secondary cell PSCell, performs conditional handover procedure from the source PCell to the target PCell. In this way, in a dual-connectivity scenario, in addition to considering the triggering event of the primary cell, the UE also needs to consider the triggering event of the primary secondary cell, the UE performs primary cell conditional handover only when both conditions are met, i.e., performing the conditional handover procedure from the source PCell to the target PCell, thereby avoiding the problem of reduced service experience of the UE due to conditional handover in dual-connectivity scenarios, and improving service experience of the UE.

As shown in FIG. 2, it is a schematic flowchart of an information transmission method according to an embodiment of the present disclosure. This method is performed by the network device. The method may specifically include the following steps.

Step 201: sending first configuration information and second configuration information of conditional handover to the UE. The first configuration information is configuration information used to indicate a first handover event that the target PCell needs to meet when performing PCell conditional handover. The second configuration information is configuration information used to indicate a second handover event that PSCell needs to meet.

It is to be noted that the network device may send one piece of information to the UE, and the piece of information includes the first configuration information and the second configuration information. The network device may also send two pieces of information to the UE, one piece of information including the first configuration information, and the other piece of information including the second configuration information.

The target PCell is a PCell adjacent to the PCell for servicing the UE. PSCell is the primary secondary cell for servicing the UE.

The first configuration information may include a configured specific handover event for triggering conditional condition, a threshold value corresponding to the handover event. The second configuration information may include a configured specific handover event for triggering conditional condition, and a threshold value corresponding to the handover event.

In the information transmission method of the embodiment of the present disclosure, the network device sends the first configuration information and the second configuration information of conditional handover to the UE, that is, the network device configures the first configuration information and the second configuration information of conditional handover for the UE, the purpose of which is to enable the UE to determine the target PCell that meets the first handover event according to the first configuration information, and to determine whether the PSCell meets the second handover event according to the second configuration information. In this way, in a dual-connectivity scenario, in addition to considering the triggering event of the primary cell, the UE also needs to consider the triggering event of the primary secondary cell, the UE performs primary cell conditional handover only when both conditions are met, thereby avoiding the problem of reduced service experience of the UE due to conditional handover in dual-connectivity scenarios, and improving service experience of the UE.

Optionally, the first configuration information includes one or more candidate target PCells, a first handover event for triggering conditional handover corresponding to each candidate target PCell, and/or a threshold value corresponding to the first handover event; and the second configuration information includes a second handover event for triggering conditional handover corresponding to PSCell and/or a threshold value corresponding to the second handover event.

Optionally, the first handover event includes the A3 event and/or the A5 event; the second handover event is the A2 event or the A4 event or a first event, and the first event is a newly defined event.

Optionally, the network device includes a primary node and/or a secondary node.

As an optional implementation manner, before the step 201, the method in the embodiment of the present disclosure may further include:
S21: receiving a measurement report sent by the UE.
S22: configuring configuration information of conditional handover for the UE according to the measurement report.

Here, the configuration information can be configured independently by the MN or jointly by the MN and the SN.

Further, in the case where the configuration information is jointly configured by the primary node and the secondary node, in an optional implementation, the step S22 may specifically include:
Step S221a: the MN configures the first configuration information for the UE according to the measurement report, and sends a notification message to the SN. The notification message is used to instruct the SN to configure the second configuration information for the UE;
Step S222a: after receiving the notification message, the SN configures the second configuration information for the UE.

That is, the first configuration information is configured by the MN, and the second configuration information is configured by the secondary node.

In another optional implementation, the step S22 may specifically include:
Step S221b: the MN configures the first configuration information for the UE according to the measurement report;
Step S222b: SN configures the second configuration information for the UE.

The above two implementation modes respectively correspond to the situation where the MN decides to configure the first configuration information for the UE based on the measurement report sent by the UE and notifies the SN to configure the second configuration information for the UE, or no notification is required and the SN itself decides to configure the second configuration information for the UE.

As shown in FIG. 3, it is a schematic flowchart of an information transmission method according to an embodiment of the present disclosure. The method is performed by a UE. The method may specifically include the following steps.

Step 301: sending first information related to success or failure of conditional handover to a network device.

The first information includes at least one of the following:
relevant identifier of cell that triggers conditional handover;
handover event or events that trigger conditional handover; here, the handover event refers to a first handover event (such as A3 event and/or A5 event) corresponding to PCell configured by the network device for the UE, and the second handover event (such as A2 event or A4 event or the first event) corresponding to PSCell;
a threshold value or values corresponding to handover event or events that trigger conditional handover;
network device that configures conditional handover for UE;
a first time difference which is a difference between a moment when the UE receives the configuration information of the conditional handover and a moment when a handover event of the conditional handover is met.

Here, the first time difference may be a difference between the moment when the UE receives the first configuration information corresponding to the PCell and the moment when the first handover event is met, or it may be a difference between the moment when the UE receives the second configuration information corresponding to the PSCell and the moment when the second handover event is met.

If the moment when the UE receives the first configuration information and the moment when the UE receives the second configuration information are the same, the first time difference may also be a difference between the moment when the UE receives the first configuration information and the second configuration information and the moment when both handover events (the first handover event and the second handover event) are met (or the moment when the handover event that is met later, is met).

If the moment when the UE receives the first configuration information and the moment when the UE receives the second configuration information are different, the first time difference may also be a difference between a moment when the configuration information (the first configuration information or the second configuration information) received first is received and a moment when both handover events are met (or the moment when the handover event that is met later, is met); or, the first time difference may also be a difference between a moment when the configuration information (the first configuration information or the second configuration information) received later is received and a moment when both handover events are met (or the moment when the handover event that is met later, is met).

Here, event being met can also be expressed as UE triggering conditional handover or UE applying conditional handover configuration.

For example, if the first time difference is large, it means that the handover takes place a long time after the UE receives the configuration, which indicates that configuring is too early, and the target cell on the network side reserves resources for the UE for too long, resulting in a waste of resources; the network side should re-adjust configuration timing (such as configuring it later) or related parameters of conditional handover, to reduce the first time difference.

Relevant event information that the handover event or events that trigger the conditional condition is met;
a second time difference which is a difference between a moment when a handover event for triggering conditional handover corresponding to the PCell is met and a moment when a handover event for triggering conditional handover corresponding to the PSCell is met.

For example, if the second time difference is large, it means that the PSCell meets the handover condition long after the PCell meets the handover condition, and the UE may experience a radio link failure (RLF) in the source PCell; or, conversely, it means that the PCell meets the handover condition long after the PSCell meets the handover condition, and the UE's dual connection quality in the source PCell and PSCell is poor. The network side should re-adjust the configuration parameters of the conditional handover so that the second time difference is as small as possible, and it is best that time elapsed between fulfilling conditional execution conditions of PCell and PSCell is zero.

Here, if the network device receives the first information related to the success or failure of the conditional handover, the network device determines, based on the first information, whether the configuration timing and configuration parameters corresponding to the configuration information of the conditional handover previously configured for the UE are appropriate; if not appropriate, the configuration information of the conditional handover is readjusted. In this way, the UE determines the target PCell that meets the first handover event through the adjusted conditional handover configuration information, and at the same time determines whether the PSCell meets the second handover condition, thereby ultimately avoiding the problem of reduced service experience of the UE due to conditional handover in dual-connectivity scenarios, and improving the service experience of the UE.

In an optional implementation, before the step 301, the method in the embodiment of the present disclosure may further include:
Step 300: recording first information related to success or failure of conditional handover.

Since the network device adjusts the configuration information of the conditional handover previously issued by the network device, in an optional implementation manner, before the step 301, the method in the embodiment of the present disclosure may further include:
S31: receiving the first configuration information and the second configuration information of the conditional handover sent by the network device. The first configuration information is configuration information used to indicate the first handover event that the target PCell needs to meet when performing the PCell conditional handover. The second configuration information is configuration information used to indicate the second handover event that PSCell needs to meet.

The first configuration information may include a configured specific handover event for triggering conditional condition, a threshold value corresponding to the handover event. The second configuration information may include a configured specific handover event for triggering conditional condition, and a threshold value corresponding to the handover event.

Optionally, the first configuration information includes one or more candidate target PCells, a first handover event for triggering conditional handover corresponding to each candidate target PCell, and/or a threshold value corresponding to the first handover event. The second configuration information includes a second handover event for triggering conditional handover corresponding to the PSCell and/or a threshold value corresponding to the second handover event.

Optionally, the first handover event includes the A3 event and/or the A5 event; the second handover event is the A2 event or the A4 event or a first event, and the first event is a newly defined event.

Here, the network device configures the first configuration information and the second configuration information of conditional handover for the UE, so that the UE determines the target PCell that meets the first handover event based on the first configuration information, and determines whether the PSCell meets the second handover event based on the second configuration information.

Optionally, the first configuration information and the second configuration information may be configured independently by the MN, or may be configured jointly by the MN and the SN.

In the case where the first configuration information and the second configuration information are jointly configured by the MN and the SN, the first configuration information is configured by the MN, and the second configuration information is configured by the SN.

Here, the technical advantage of configuring the second configuration information by the SN is that the SCG's own load requirement can be considered to configure the threshold corresponding to the second handover event for the UE. For example, if the second handover event is an A2 event, when the SCG load is high, a higher A2 event threshold can be configured for the UE, so that the UE can easily trigger conditional handover; otherwise, a lower A2 event threshold can be configured, so that the UE can reside in the current serving cell as much as possible without triggering conditional handover. For another example, if the second handover event is the first event, where the first event refers to that the first preset parameter of the UE in PSCell or SCG is lower than a certain threshold, then when the load of the SCG is high, a higher first event threshold can be configured for the UE, so that the UE can easily trigger conditional handover; otherwise, a lower first event threshold can be configured for the UE, so that the UE can reside in the current serving cell as much as possible without triggering conditional handover. For another example, if the second handover event is the first event, where the first event refers to that the second preset parameter of the UE for transmitting data packets through PSCell or SCG is higher than a certain threshold, when the load of SCG is high, a lower first event threshold is configured for the UE, so that the UE can easily trigger conditional handover; otherwise, a higher first event threshold can be configured for the UE, so that the UE can reside in the current serving cell as much as possible without triggering conditional handover.

As an optional implementation, the step S31 may specifically include:
Step S311a: receiving the first configuration information and the second configuration information of the conditional handover sent by the MN.

In this implementation, for the MN side, the first configuration information and the second configuration information may be independently configured by the MN and sent to the UE by the MN; or the first configuration information and the second configuration information may be jointly configured by the MN and the SN, the SN sends the second configuration information to the MN after the SN completes the configuration of the second configuration information, and the MN sends the first configuration information and the second configuration information to the UE.

As another optional implementation, the step S11 may specifically include:
Step S311b: receiving the first configuration information sent by the MN;
Step S312b: receiving the second configuration information sent by the SN.

This implementation corresponds to the situation where the first configuration information and the second configuration information are jointly configured by the MN and the SN, and the MN configures the first configuration information and the SN configures the second configuration information.

As an optional implementation manner, before the step S31, the method in the embodiment of the present disclosure may further include:
S30: sending a measurement report to the master node. The measurement report is used to trigger the network device to configure configuration information of conditional handover for the UE.

It is to be noted that the MN decides to configure the first configuration information and the second configuration information of conditional handover for the UE according to the measurement report sent by the UE. Alternatively, the MN decides to configure the first configuration information for the UE based on the measurement report sent by the UE, and notifies the SN to configure the second configuration information for the UE, or no notification is required and the SN itself decides to configure the second configuration information for the UE.

In the case where the UE records the first information related to failure of the conditional handover, it means that the configuration timing and configuration parameter of the configuration information of the conditional handover previously configured by the network device for the UE are not appropriate and need to be adjusted. In the case where the UE records the first information related to success of the conditional handover, it can be determined, based on the first information, whether the configuration timing and configuration parameters corresponding to the configuration information of the conditional handover previously configured for the UE are appropriate; if they are not appropriate and need to be adjusted, the network device adjusts the configuration information of the conditional handover through the first information reported by the UE.

Optionally, the threshold value corresponding to the handover event for triggering conditional handover includes a threshold value corresponding to the first handover event that triggers conditional handover, and/or a threshold value corresponding to the second handover event that triggers conditional handover.

The network device that configures configuration information of conditional handover for the UE includes MN and/or SN. Here, the purpose for that the UE records the network device which configures conditional handover for the UE, is to indicated to the UE, which network device (such as to the MN or SN) the UE sends the first information to.

If the first time difference is a difference between a moment when the UE receives the first configuration information and a moment when the first handover event is met, when the first time difference is greater than or equal to a first preset threshold, it means that the first time difference is too long, the network device configures the first configuration information too early, and the network device needs to delay the configuration timing of the first configuration information.

If the first time difference is a difference between a moment when the UE receives the first configuration information and a moment when the first handover event is met, when the first time difference is less than the first preset threshold, it means that the first time difference is too short, the network device configures the first configuration information too late, and the network device needs to advance the configuration timing of the first configuration information.

If the first time difference is a difference between a moment when the UE receives the second configuration information and a moment when the second handover event is met, when the first time difference is greater than or equal to a second preset threshold, it means that the first time difference is too long, the network device configures the second configuration information too early, and the network device needs to delay the configuration timing of the second configuration information.

If the first time difference is a difference between a moment when the UE receives the second configuration information and a moment when the second handover event is met, when the first time difference is less than a second preset threshold, it means that the first time difference is too short, the network device configures the second configuration information too late, and the network device needs to advance the configuration timing of the second configuration information.

Here, the relevant event information that the handover event or triggering conditional handover is met, may be one or more of the following information: a specific handover event that is met (such as the first handover event or the second handover event, or both are satisfied), order of time when events are met (for example, the first or last one that is met, is the first handover event or an event for PCell, or the first or last one that is met, is the second handover event or an event for PSCell), handover event that is met is for PCell or PSCell or both, and a time difference between the first handover event (or an event for PCell) and the second handover event (or an event for PSCell) is met.

In an example, if the first handover event is triggered but the second handover event is not triggered, the UE records the first information; or, the trigger time of the first handover event is earlier than the trigger time of the second handover event, and a difference (i.e., the second time difference) between the two is greater than or equal to a third preset threshold, it means that the configured threshold for triggering the second handover event should be adjusted. If the second handover event is an A2 event, the threshold for triggering the A2 event should be lowered, the threshold value of the A2 event should be specifically raised so that the UE can trigger conditional handover in advance. If the second handover event is the first event, and the first event refers to that the UE's first preset parameter in PSCell or SCG is lower than a certain threshold, the threshold for triggering the first event should be lowered, and the threshold for the first event should be specifically raised so that the UE can trigger conditional handover in advance. If the second handover event is the first event, and the first event refers to that the second preset parameter of the UE for transmitting data packets through PSCell or SCG is higher than a certain threshold, the threshold for triggering the first event should be raised, and the threshold for the first event should be specifically lowered so that the UE can trigger conditional handover in advance.

If the second handover event is triggered, but the first handover event is not triggered, the UE records the first information; or, the trigger time of the second handover event is earlier than the trigger time of the first handover event, and a difference ( i.e., the second time difference) between the two is greater than or equal to the third preset threshold, it means that the configured threshold for triggering the second handover event should be adjusted. If the second handover event is an A2 event, the threshold for triggering the A2 event should be raised, specifically lowering a threshold value of the A2 event, so that the UE triggers conditional handover later. If the second handover event is the first event, and the first event refers to that the first preset parameter of the UE in PSCell or SCG is lower than a certain threshold, the threshold for triggering the first event should be raised, specifically, the threshold value of the first event should be lowered so that the UE can trigger the conditional handover later. If the second handover event is the first event, and the first event refers to that the second preset parameter of the UE for transmitting data packet through PSCell or SCG is higher than a certain threshold, the threshold for triggering the first event should be lowered, and the threshold for the first event should be specifically raised so that the UE can trigger conditional handover later.

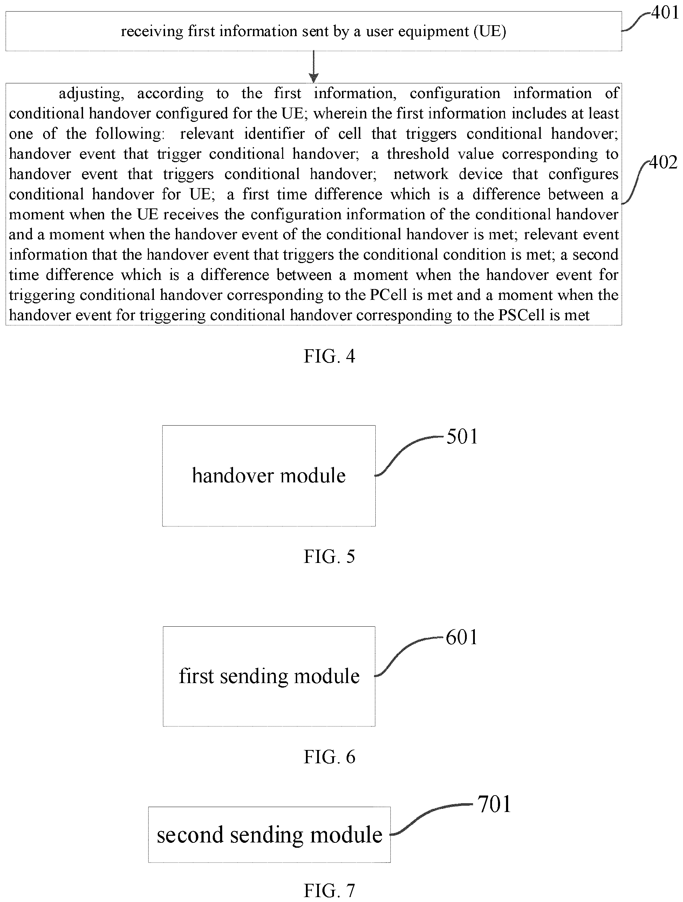

As shown in FIG. 4, it is a schematic flowchart of an information processing method according to an embodiment of the present disclosure. The method is performed by a network device. The method may specifically include the following steps.

Step 401: receiving first information sent by a UE.

Optionally, the first information is information recorded by the UE related to success or failure of UE conditional handover.

Step 402: adjusting, according to the first information, configuration information of conditional handover configured for the UE.

The first information includes at least one of the following:
relevant identifier of cell that triggers conditional handover;
handover event or events that trigger conditional handover;
a threshold value or values corresponding to handover event or events that trigger conditional handover;
network device that configures conditional handover for UE;
a first time difference which is a difference between a moment when the UE receives the configuration information of the conditional handover and a moment when a handover event of the conditional handover is met;
relevant event information that the handover event or events that trigger the conditional condition is met;
a second time difference which is a difference between a moment when a handover event for triggering conditional handover corresponding to the PCell is met and a moment when a handover event for triggering conditional handover corresponding to the PSCell is met.

Here, after receiving the first information, the network device determines, based on the first information, whether the configuration timing and configuration parameters corresponding to the configuration information of the conditional handover previously configured for the UE are appropriate; if not appropriate, the configuration information of the conditional handover is readjusted. In this way, the UE determines the target PCell that meets the first handover event through the adjusted conditional handover configuration information, and at the same time determines whether the PSCell meets the second handover condition, thereby ultimately avoiding the problem of reduced service experience of the UE due to conditional handover in dual-connectivity scenarios, and improving the service experience of the UE.

Since the network device adjusts the configuration information of the conditional handover previously issued by the network device, in an optional implementation manner, before the step 401, the method in the embodiment of the present disclosure may further include:
S41: sending first configuration information and second configuration information of conditional handover to the UE. The first configuration information is configuration information used to indicate the first handover event that the target PCell needs to meet when performing the PCell conditional handover. The second configuration information is configuration information used to indicate the second handover event that PSCell needs to meet.

It is to be noted that the network device can send one piece of information to the UE, and the piece of information includes the first configuration information and the second configuration information. The network device can also send two pieces of information to the UE, one including the first configuration information, and the other including the second configuration information.

The first configuration information may include a configured specific handover event for triggering conditional condition, a threshold value corresponding to the handover event. The second configuration information may include a configured specific handover event for triggering conditional condition, and a threshold value corresponding to the handover event.

Optionally, the first configuration information includes one or more candidate target PCells, a first handover event for triggering conditional handover corresponding to each candidate target PCell, and/or a threshold value corresponding to the first handover event. The second configuration information includes a second handover event for triggering conditional handover corresponding to the PSCell and/or a threshold value corresponding to the second handover event.

Optionally, the first handover event includes the A3 event and/or the A5 event; the second handover event is the A2 event or the A4 event or a first event, and the first event is a newly defined event.

Here, the network device configures the first configuration information and the second configuration information of conditional handover for the UE, so that the UE determines the target PCell that meets the first handover event based on the first configuration information, and determines whether the PSCell meets the second handover event based on the second configuration information.

Optionally, the first configuration information and the second configuration information may be configured independently by the MN, or may be configured jointly by the MN and the SN.

Further, in the case where the first configuration information and the second configuration information are jointly configured by the MN and the SN, the first configuration information is configured by the MN, and the second configuration information is configured by the SN.

Here, the technical advantage of configuring the second configuration information by the SN is that the SCG's own load requirement can be considered to configure the threshold corresponding to the second handover event for the UE. For example, if the second handover event is an A2 event, when the SCG load is high, a higher A2 event threshold can be configured for the UE, so that the UE can easily trigger conditional handover; otherwise, a lower A2 event threshold can be configured, so that the UE can reside in the current serving cell as much as possible without triggering conditional handover. For another example, if the second handover event is the first event, where the first event refers to that the first preset parameter of the UE in PSCell or SCG is lower than a certain threshold, then when the load of the SCG is high, a higher first event threshold can be configured for the UE, so that the UE can easily trigger conditional handover; otherwise, a lower first event threshold can be configured for the UE, so that the UE can reside in the current serving cell as much as possible without triggering conditional handover. For another example, if the second handover event is the first event, where the first event refers to that the second preset parameter of the UE for transmitting data packets through PSCell or SCG is higher than a certain threshold, when the load of SCG is high, a lower first event threshold is configured for the UE, so that the UE can easily trigger conditional handover; otherwise, a higher first event threshold can be configured for the UE, so that the UE can reside in the current serving cell as much as possible without triggering conditional handover.

As an optional implementation manner, before the step S41, the method in the embodiment of the present disclosure may further include:
S51: receiving a measurement report sent by the UE.
S52: configuring configuration information of conditional handover for the UE according to the measurement report.

Here, the configuration information can be configured independently by the MN or jointly by the MN and the SN.

Further, in the case where the configuration information is configured by the primary node and the secondary node, in an optional implementation, the step S52 may specifically include:
Step S521a: the MN configures the first configuration information for the UE according to the measurement report, and sends a notification message to the SN. The notification message is used to instruct the SN to configure the second configuration information for the UE;
Step S522a: after receiving the notification message, the SN configures the second configuration information for the UE.

That is, the first configuration information is configured by the MN, and the second configuration information is configured by the secondary node.

**In** another optional implementation, the step S52 may specifically include:
Step S521b: the MN configures the first configuration information for the UE according to the measurement report;
Step S522b: SN configures the second configuration information for the UE.

The above two implementation modes respectively correspond to the situation where the MN decides to configure the first configuration information for the UE based on the measurement report sent by the UE and notifies the SN to configure the second configuration information for the UE, or no notification is required and the SN itself decides to configure the second configuration information for the UE.

As an optional implementation, the step S41 may specifically include:
Step S411a: the MN sends the first configuration information and the second configuration information of conditional handover to the UE.

In this implementation, for the MN side, the first configuration information and the second configuration information may be independently configured by the MN and sent to the UE by the MN; or the first configuration information and the second configuration information may be jointly configured by the MN and the SN, the SN sends the second configuration information to the MN after the SN completes the configuration of the second configuration information, and the MN sends the first configuration information and the second configuration information to the UE.

As another optional implementation, the step S41 may specifically include:
Step S411b: the MN sends the first configuration information to the UE;
Step S412b: the SN sends the second configuration information to the UE.

This implementation corresponds to the situation where the configuration information are jointly configured by the MN and the SN, and the MN configures the first configuration information and the SN configures the second configuration information.

It is to be noted that the MN decides to configure the configuration information of conditional handover for the UE according to the measurement report sent by the UE. Alternatively, the MN decides to configure the first configuration information for the UE based on the measurement report sent by the UE, and notifies the SN to configure the second configuration information for the UE, or no notification is required and the SN itself decides to configure the second configuration information for the UE.

In the case where the UE records the first information related to failure of the conditional handover, it means that the configuration timing and configuration parameter of the configuration information of the conditional handover previously configured by the network device for the UE are not appropriate and need to be adjusted. In the case where the UE records the first information related to success of the conditional handover, it can be determined, based on the first information, whether the configuration timing and configuration parameters corresponding to the configuration information of the conditional handover previously configured for the UE are appropriate; if they are not appropriate and need to be adjusted, the network device adjusts the configuration information of the conditional handover through the first information reported by the UE.

In an optional implementation, the step 402 may include:
if the first time difference is a difference between a moment when the UE receives the first configuration information and a moment when the first handover event is met, when the first time difference is greater than or equal to a first preset threshold, delaying configuration timing of the first configuration information;
if the first time difference is a difference between a moment when the UE receives the first configuration information and a moment when the first handover event is met, when the first time difference is less than the first preset threshold, advancing the configuration timing of the first configuration information;
if the first time difference is a difference between a moment when the UE receives the second configuration information and a moment when the second handover event is met, when the first time difference is greater than or equal to a second preset threshold, delaying the configuration timing of the second configuration information;
if the first time difference is a difference between a moment when the UE receives the second configuration information and a moment when the second handover event is met, when the first time difference is less than a second preset threshold, advancing the configuration timing of the second configuration information.

In another optional implementation, the second handover event is the A2 event. Accordingly, the step 402 may include:
if according to the relevant event information that the handover event for triggering conditional handover is met, it is determined that the first handover event is triggered but the second handover event is not triggered, or, the triggering time of the first handover event is earlier than the triggering time of the second handover event and the second time difference is greater than or equal to a third preset threshold, raising a threshold corresponding to the A2 event;
if according to the relevant event information that the handover event for triggering conditional handover is met, it is determined that the second handover event is triggered but the first handover event is not triggered, or, the triggering time of the second handover event is earlier than the triggering time of the first handover event and the second time difference is greater than or equal to the third preset threshold, lowering the threshold corresponding to the A2 event.

In yet another optional implementation, the second handover event is the first event, and the first event refers to that the first preset parameter of the UE in PSCell or SCG is lower than a certain threshold. Accordingly, the step 402 may include:
if according to the relevant event information that the handover event for triggering conditional handover is met, it is determined that the first handover event is triggered but the second handover event is not triggered, or, the triggering time of the first handover event is earlier than the triggering time of the second handover event and the second time difference is greater than or equal to a third preset threshold, raising a threshold corresponding to the first event;
if according to the relevant event information that the handover event for triggering conditional handover is met, it is determined that the second handover event is triggered but the first handover event is not triggered, or, the triggering time of the second handover event is earlier than the triggering time of the first handover event and the second time difference is greater than or equal to the third preset threshold, lowering the threshold corresponding to the first event.

In yet another optional implementation, the second handover event is the first event, and the first event refers to that the second preset parameter of the UE for transmitting the data packet through PSCell or SCG is higher than a certain threshold. Correspondingly, the step 402 may include:
if according to the relevant event information that the handover event for triggering conditional handover is met, it is determined that the first handover event is triggered but the second handover event is not triggered, or, the triggering time of the first handover event is earlier than the triggering time of the second handover event and the second time difference is greater than or equal to a third preset threshold, lowering a threshold corresponding to the first event;
if according to the relevant event information that the handover event for triggering conditional handover is met, it is determined that the second handover event is triggered but the first handover event is not triggered, or, the triggering time of the second handover event is earlier than the triggering time of the first handover event and the second time difference is greater than or equal to the third preset threshold, raising the threshold corresponding to the first event.

In order to better achieve the above purpose, as shown in FIG. 5, one embodiment of the present disclosure further provides a conditional handover device, performed by a UE. The UE is connected to the source primary cell PCell and the primary secondary cells PSCell. The device includes:
a handover module 501 used to, in a case where there is a target primary cell (PCell) that meets a first handover event and a PSCell that meets a second handover event, perform a conditional handover procedure from the source PCell to the target PCell.

Optionally, the device in the embodiment of the present disclosure further includes:
a first receiving module used to receive first configuration information and second configuration information of conditional handover sent by a network device; where the first configuration information is configuration information used to indicate a first handover event that the target PCell needs to meet when performing PCell conditional handover, and the second configuration information is configuration information used to indicate a second handover event that PSCell needs to meet;
a first processing module used to determine a target PCell that meets the first handover event according to the first configuration information;
a second processing module used to determine whether the PSCell meets the second handover event according to the second configuration information.

Optionally, the first configuration information includes one or more candidate target PCells, a first handover event for triggering conditional handover corresponding to each candidate target PCell, and/or a threshold value corresponding to the first handover event.

Correspondingly, the first processing module includes:
a first processing unit used to, according to the first configuration information, select a first candidate target PCell that meets the corresponding first handover event from the one or more candidate target PCells;
a second processing unit used to determine the first candidate target PCell as the target PCell.

Optionally, the second configuration information includes a second handover event for triggering conditional handover corresponding to the PSCell and/or a threshold value corresponding to the second handover event.

Optionally, the first handover event includes the A3 event and/or the A5 event; the second handover event is the A2 event or the A4 event or a first event, and the first event is a newly defined event.

Optionally, the first configuration information and the second configuration information are configured by the primary node, or the first configuration information is configured by the primary node and the second configuration information is configured by the secondary node.

In the conditional handover device in the embodiment of the present disclosure, when there is a target primary cell PCell that meets the first handover event, and the PSCell meets the second handover event, conditional handover procedure from the source PCell to the target PCell is performed. In this way, in a dual-connectivity scenario, in addition to considering the triggering event of the primary cell, the UE also needs to consider the triggering event of the primary secondary cell, the UE performs primary cell conditional handover only when both conditions are met, i.e., performing the conditional handover procedure from the source PCell to the target PCell, thereby avoiding the problem of reduced service experience of the UE due to conditional handover in dual-connectivity scenarios, and improving service experience of the UE.

As shown in FIG. 6, one embodiment of the present disclosure further provides an information transmission device, which is performed by a network device. The device includes:
a first sending module 601 used to send first configuration information and second configuration information of conditional handover to the UE; where the first configuration information is configuration information used to indicate a first handover event that the target PCell needs to meet when performing PCell conditional handover; the second configuration information is configuration information used to indicate a second handover event that PSCell needs to meet.

Optionally, the first configuration information includes one or more candidate target PCells, a first handover event for triggering conditional handover corresponding to each candidate target PCell, and/or a threshold value corresponding to the first handover event; and the second configuration information includes a second handover event for triggering conditional handover corresponding to PSCell and/or a threshold value corresponding to the second handover event.

Optionally, the first handover event includes the A3 event and/or the A5 event; the second handover event is the A2 event or the A4 event or a first event, and the first event is a newly defined event.

Optionally, the network device includes a primary node and/or a secondary node.

In the information transmission device in the embodiment of the present disclosure, the network device sends the first configuration information and the second configuration information of conditional handover to the UE, that is, the network device configures the first configuration information and the second configuration information of conditional handover for the UE, the purpose of which is to enable the UE to determine the target PCell that meets the first handover event according to the first configuration information, and to determine whether the PSCell meets the second handover event according to the second configuration information. In this way, in a dual-connectivity scenario, in addition to considering the triggering event of the primary cell, the UE also needs to consider the triggering event of the primary secondary cell, the UE performs primary cell conditional handover only when both conditions are met, thereby avoiding the problem of reduced service experience of the UE due to conditional handover in dual-connectivity scenarios, and improving service experience of the UE.

As shown in FIG. 7, one embodiment of the present disclosure further provides an information transmission device, which is performed by a UE and includes:
a second sending module 701 used to send first information related to success or failure of conditional handover to a network device.

The first information includes at least one of the following:
relevant identifier of cell that triggers conditional handover;
handover event or events that trigger conditional handover;
a threshold value or values corresponding to handover event or events that trigger conditional handover;
network device that configures conditional handover for UE;
a first time difference which is a difference between a moment when the UE receives the configuration information of the conditional handover and a moment when a handover event of the conditional handover is met;
relevant event information that the handover event or events that trigger the conditional condition is met;
a second time difference which is a difference between a moment when a handover event for triggering conditional handover corresponding to the PCell is met and a moment when a handover event for triggering conditional handover corresponding to the PSCell is met.

Optionally, the device in the embodiment of the present disclosure further includes:
a second receiving module used to receive the first configuration information and the second configuration information of the conditional handover sent by the network device; where the first configuration information is configuration information used to indicate the first handover event that the target PCell needs to meet when performing the PCell conditional handover.; the second configuration information is configuration information used to indicate the second handover event that PSCell needs to meet.

Optionally, the first configuration information includes one or more candidate target PCells, a first handover event for triggering conditional handover corresponding to each candidate target PCell, and/or a threshold value corresponding to the first handover event. The second configuration information includes a second handover event for triggering conditional handover corresponding to the PSCell and/or a threshold value corresponding to the second handover event.

In the information transmission device of the embodiment of the present disclosure, the first information related to the success or failure of the conditional handover is sent to the network device, so that after receiving the first information, the network device determines, based on the first information, whether the configuration timing and configuration parameters corresponding to the configuration information of the conditional handover previously configured for the UE are appropriate; if not appropriate, the configuration information of the conditional handover is readjusted. In this way, the UE determines the target PCell that meets the first handover event through the adjusted conditional handover configuration information, and at the same time determines whether the PSCell meets the second handover condition, thereby ultimately avoiding the problem of reduced service experience of the UE due to conditional handover in dual-connectivity scenarios, and improving the service experience of the UE.

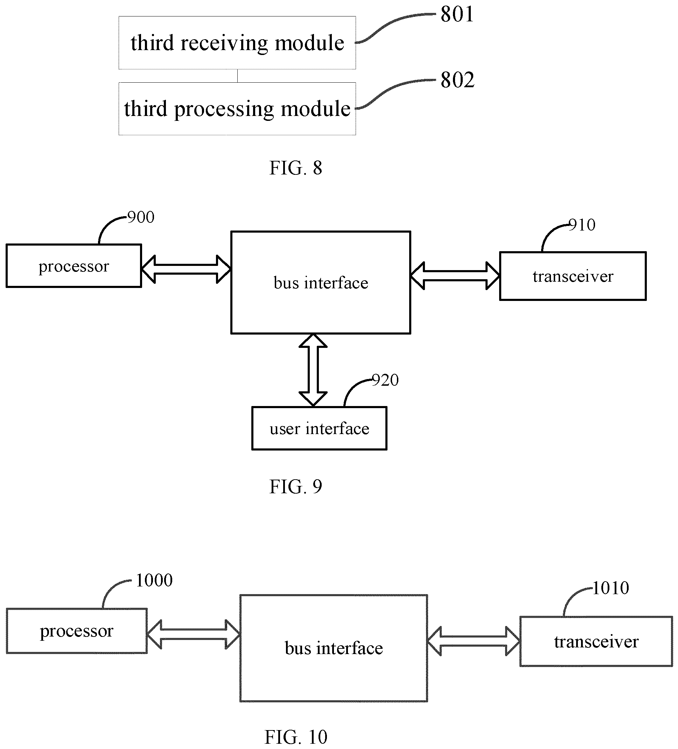

As shown in FIG. 8, one embodiment of the present disclosure further provides an information processing device, which is performed by a network device. The device includes:
a third receiving module 801 used to receive first information sent by a UE;
a third processing module 802 used to adjust, according to the first information, configuration information of conditional handover configured for the UE.

The first information includes at least one of the following:
relevant identifier of cell that triggers conditional handover;
handover event or events that trigger conditional handover;
a threshold value or values corresponding to handover event or events that trigger conditional handover;
network device that configures conditional handover for UE;
a first time difference which is a difference between a moment when the UE receives the configuration information of the conditional handover and a moment when a handover event of the conditional handover is met;
relevant event information that the handover event or events that trigger the conditional condition is met;
a second time difference which is a difference between a moment when a handover event for triggering conditional handover corresponding to the PCell is met and a moment when a handover event for triggering conditional handover corresponding to the PSCell is met.

Optionally, the method in this embodiment of the present disclosure further includes:
a third sending module used to send first configuration information and second configuration information of conditional handover to the UE; where the first configuration information is configuration information used to indicate the first handover event that the target PCell needs to meet when performing the PCell conditional handover, and the second configuration information is configuration information used to indicate the second handover event that PSCell needs to meet.

Optionally, the first configuration information includes one or more candidate target PCells, a first handover event for triggering conditional handover corresponding to each candidate target PCell, and/or a threshold value corresponding to the first handover event. The second configuration information includes a second handover event for triggering conditional handover corresponding to the PSCell and/or a threshold value corresponding to the second handover event.

In the information processing device in the embodiment of the present disclosure, the first information sent by the UE is received; after receiving the first information, the information processing device determines, based on the first information, whether the configuration timing and configuration parameters corresponding to the configuration information of the conditional handover previously configured for the UE are appropriate; if not appropriate, the configuration information of the conditional handover is readjusted. In this way, the UE determines the target PCell that meets the first handover event through the adjusted conditional handover configuration information, and at the same time determines whether the PSCell meets the second handover condition, thereby ultimately avoiding the problem of reduced service experience of the UE due to conditional handover in dual-connectivity scenarios, and improving the service experience of the UE.

As shown in FIG. 9, one embodiment of the present disclosure further provides a UE, which is connected to a source primary cell PCell and a primary secondary cells PSCell, and includes a processor 900 and a transceiver 910. The UE further includes a user interface 920. The processor 900 is used to perform the following processes:
in a case where there is a target primary cell (PCell) that meets a first handover event and a PSCell that meets a second handover event, performing a conditional handover procedure from the source PCell to the target PCell.

Optionally, the transceiver 910 is also used to:
receive first configuration information and second configuration information of conditional handover sent by a network device; where the first configuration information is configuration information used to indicate a first handover event that the target PCell needs to meet when performing PCell conditional handover, and the second configuration information is configuration information used to indicate a second handover event that PSCell needs to meet.

Correspondingly, the processor 900 is also used to:
determine a target PCell that meets the first handover event according to the first configuration information;
determine whether the PSCell meets the second handover event according to the second configuration information.

Optionally, the first configuration information includes one or more candidate target PCells, a first handover event for triggering conditional handover corresponding to each candidate target PCell, and/or a threshold value corresponding to the first handover event.

Correspondingly, the processor 900 is also used to:
according to the first configuration information, select a first candidate target PCell that meets the corresponding first handover event from the one or more candidate target PCells;
determine the first candidate target PCell as the target PCell.

Optionally, the second configuration information includes a second handover event for triggering conditional handover corresponding to the PSCell and/or a threshold value corresponding to the second handover event.

Optionally, the first handover event includes the A3 event and/or the A5 event; the second handover event is the A2 event or the A4 event or the first event, and the first event is a newly defined event.

Optionally, the first configuration information and the second configuration information are configured by the primary node, or the first configuration information is configured by the primary node and the second configuration information is configured by the secondary node.

In the UE in the embodiment of the present disclosure, when there is a target primary cell PCell that meets the first handover event, and the PSCell meets the second handover event, the UE performs conditional handover procedure from the source PCell to the target PCell. In this way, in a dual-connectivity scenario, in addition to considering the triggering event of the primary cell, the UE also needs to consider the triggering event of the primary secondary cell, the UE performs primary cell conditional handover only when both conditions are met, i.e., performing the conditional handover procedure from the source PCell to the target PCell, thereby avoiding the problem of reduced service experience of the UE due to conditional handover in dual-connectivity scenarios, and improving service experience of the UE.

As shown in FIG. 10, one embodiment of the present disclosure further provides a network device, including a processor 1000 and a transceiver 1010. The processor 1000 is used to perform the following process:
Sending, through the transceiver 1010, first configuration information and second configuration information of conditional handover to the UE; where the first configuration information is configuration information used to indicate a first handover event that the target PCell needs to meet when performing PCell conditional handover, and the second configuration information is configuration information used to indicate a second handover event that PSCell needs to meet.

Optionally, the first configuration information includes one or more candidate target PCells, a first handover event for triggering conditional handover corresponding to each candidate target PCell, and/or a threshold value corresponding to the first handover event; and the second configuration information includes a second handover event for triggering conditional handover corresponding to PSCell and/or a threshold value corresponding to the second handover event.

Optionally, the first handover event includes the A3 event and/or the A5 event; the second handover event is the A2 event or the A4 event or a first event, and the first event is a newly defined event.

Optionally, the network device includes a primary node and/or a secondary node.

In the network device in the embodiment of the present disclosure, the network device sends the first configuration information and the second configuration information of conditional handover to the UE, that is, the network device configures the first configuration information and the second configuration information of conditional handover for the UE, the purpose of which is to enable the UE to determine the target PCell that meets the first handover event according to the first configuration information, and to determine whether the PSCell meets the second handover event according to the second configuration information. In this way, in a dual-connectivity scenario, in addition to considering the triggering event of the primary cell, the UE also needs to consider the triggering event of the primary secondary cell, the UE performs primary cell conditional handover only when both conditions are met, thereby avoiding the problem of reduced service experience of the UE due to conditional handover in dual-connectivity scenarios, and improving service experience of the UE.

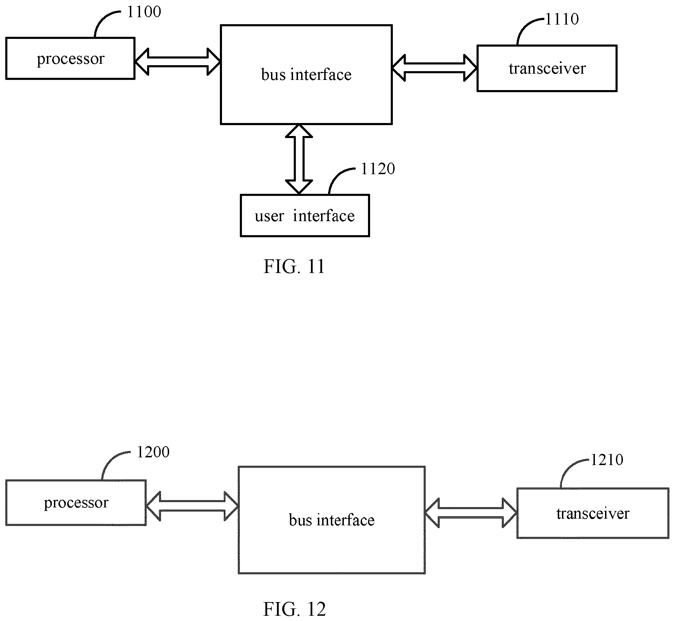

As shown in FIG. 11, one embodiment of the present disclosure further provides a UE, including a processor 1100 and a transceiver 1110. The UE further includes a user interface 1120. The processor 1100 is used to perform the following process:
sending, through the transceiver 1110, first information related to success or failure of conditional handover to a network device.

The first information includes at least one of the following:
relevant identifier of cell that triggers conditional handover;
handover event or events that trigger conditional handover;
a threshold value or values corresponding to handover event or events that trigger conditional handover;
network device that configures conditional handover for UE;
a first time difference which is a difference between a moment when the UE receives the configuration information of the conditional handover and a moment when a handover event of the conditional handover is met;
relevant event information that the handover event or events that trigger the conditional condition is met;
a second time difference which is a difference between a moment when a handover event for triggering conditional handover corresponding to the PCell is met and a moment when a handover event for triggering conditional handover corresponding to the PSCell is met.

Optionally, the transceiver 1110 is further used to:
receive the first configuration information and the second configuration information of the conditional handover sent by the network device; where the first configuration information is configuration information used to indicate the first handover event that the target PCell needs to meet when performing the PCell conditional handover.; the second configuration information is configuration information used to indicate the second handover event that PSCell needs to meet.

Optionally, the first configuration information includes one or more candidate target PCells, a first handover event for triggering conditional handover corresponding to each candidate target PCell, and/or a threshold value corresponding to the first handover event. The second configuration information includes a second handover event for triggering conditional handover corresponding to the PSCell and/or a threshold value corresponding to the second handover event.

In the UE of the embodiment of the present disclosure, the first information related to the success or failure of the conditional handover is sent to the network device, so that after receiving the first information, the network device determines, based on the first information, whether the configuration timing and configuration parameters corresponding to the configuration information of the conditional handover previously configured for the UE are appropriate; if not appropriate, the configuration information of the conditional handover is readjusted. In this way, the UE determines the target PCell that meets the first handover event through the adjusted conditional handover configuration information, and at the same time determines whether the PSCell meets the second handover condition, thereby ultimately avoiding the problem of reduced service experience of the UE due to conditional handover in dual-connectivity scenarios, and improving the service experience of the UE.

As shown in FIG. 12, one embodiment of the present disclosure further provides a network device, including a processor 1200 and a transceiver 1210. The processor 1200 is used to perform the following process:
receiving, through the transceiver 1210, first information sent by a UE;
adjusting, according to the first information, configuration information of conditional handover configured for the UE.

The first information includes at least one of the following:
relevant identifier of cell that triggers conditional handover;
handover event or events that trigger conditional handover;
a threshold value or values corresponding to handover event or events that trigger conditional handover;
network device that configures conditional handover for UE;
a first time difference which is a difference between a moment when the UE receives the configuration information of the conditional handover and a moment when a handover event of the conditional handover is met;
relevant event information that the handover event or events that trigger the conditional condition is met;
a second time difference which is a difference between a moment when a handover event for triggering conditional handover corresponding to the PCell is met and a moment when a handover event for triggering conditional handover corresponding to the PSCell is met.

Optionally, the transceiver 1210 is further used to:
send first configuration information and second configuration information of conditional handover to the UE; where the first configuration information is configuration information used to indicate the first handover event that the target PCell needs to meet when performing the PCell conditional handover, and the second configuration information is configuration information used to indicate the second handover event that PSCell needs to meet.

Optionally, the first configuration information includes one or more candidate target PCells, a first handover event for triggering conditional handover corresponding to each candidate target PCell, and/or a threshold value corresponding to the first handover event. The second configuration information includes a second handover event for triggering conditional handover corresponding to the PSCell and/or a threshold value corresponding to the second handover event.

In the network device in the embodiment of the present disclosure, the first information sent by the UE is received; after receiving the first information, the network device determines, based on the first information, whether the configuration timing and configuration parameters corresponding to the configuration information of the conditional handover previously configured for the UE are appropriate; if not appropriate, the configuration information of the conditional handover is readjusted. In this way, the UE determines the target PCell that meets the first handover event through the adjusted conditional handover configuration information, and at the same time determines whether the PSCell meets the second handover condition, thereby ultimately avoiding the problem of reduced service experience of the UE due to conditional handover in dual-connectivity scenarios, and improving the service experience of the UE.

One embodiment of the present disclosure further provides a UE, including a memory, a processor, and a computer program stored in the memory and executable on the processor. When the processor executes the program, the processor performs each process in the above conditional handover method embodiment, or performs each process in the above information transmission method embodiment, and the same technical effect can be achieved, which will not be described here to avoid repetition.

One embodiment of the present disclosure further provides a network device, including a memory, a processor, and a computer program stored in the memory and executable on the processor. When the processor executes the program, the processor performs each process in the above conditional handover method embodiment, or performs each process in the above information transmission method embodiment, and the same technical effect can be achieved, which will not be described here to avoid repetition.

One embodiment of the present disclosure further provides a computer-readable storage medium including a computer program stored thereon. The program, when executed by a processor, causes the processor to perform each process in the above conditional handover method embodiment, or perform each process in the above information transmission method embodiment, or perform each process in the above information processing method embodiment, and the same technical effect can be achieved, which will not be described here to avoid repetition. The computer-readable storage media may be read-only memory (ROM), random access memory (RAM), magnetic disk or optical disk, etc.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

The above are the preferred embodiments of the present disclosure. It is to be noted that for those of ordinary skill in the art, several improvements and modifications can be made without departing from the principles described in the present disclosure. These improvements and modifications should be regarded as falling within the scope of protection of the present disclosure.

## Claims

1. A conditional handover method, performed by a user equipment (UE) which is connected to a primary cell (PCell) and a primary secondary cell (PSCell), the method comprising:
in a case where there is a target primary cell (PCell) that meets a first handover event and a PSCell that meets a second handover event, performing a conditional handover procedure from a source PCell to the target PCell.

2. The method according to claim 1, further comprising:
receiving first configuration information and second configuration information of conditional handover sent by a network device; wherein the first configuration information is configuration information used to indicate the first handover event that the target PCell needs to meet when performing PCell conditional handover, and the second configuration information is configuration information used to indicate the second handover event that PSCell needs to meet;
determining the target PCell that meets the first handover event according to the first configuration information;
determining whether the PSCell meets the second handover event according to the second configuration information.

3. The method according to claim 2, wherein the first configuration information includes one or more candidate target PCells, the first handover event for triggering conditional handover corresponding to each candidate target PCell, and/or a threshold value corresponding to the first handover event;
wherein the determining the target PCell that meets the first handover event according to the first configuration information, includes:
according to the first configuration information, selecting a first candidate target PCell that meets the corresponding first handover event from the one or more candidate target PCells;
determining the first candidate target PCell as the target PCell.

4. The method according to claim 2, wherein the second configuration information includes the second handover event for triggering conditional handover corresponding to the PSCell and/or a threshold value corresponding to the second handover event.

5. The method according to claim 1, wherein the first handover event includes A3 event and/or A5 event; the second handover event is A2 event or A4 event or a first event, and the first event is a newly defined event.

6. The method according to claim 2, wherein the first configuration information and the second configuration information are configured by a primary node, or the first configuration information is configured by the primary node and the second configuration information is configured by a secondary node.

7. An information transmission method, performed by a network device, comprising:
sending first configuration information and second configuration information of conditional handover to a user equipment (UE); wherein the first configuration information is configuration information used to indicate a first handover event that a target PCell needs to meet when performing PCell conditional handover; the second configuration information is configuration information used to indicate a second handover event that a PSCell needs to meet.

8. The method according to claim 7, wherein the first configuration information includes one or more candidate target PCells, the first handover event for triggering conditional handover corresponding to each candidate target PCell, and/or a threshold value corresponding to the first handover event; and the second configuration information includes the second handover event for triggering conditional handover corresponding to PSCell and/or a threshold value corresponding to the second handover event.

9. The method according to claim 7, wherein the first handover event includes A3 event and/or A5 event; the second handover event is A2 event or A4 event or a first event, and the first event is a newly defined event.

10. The method according to claim 7, wherein the network device includes a primary node and/or a secondary node.

11. An information transmission method, performed by a user equipment (UE), comprising:
sending first information related to success or failure of conditional handover to a network device;
wherein the first information includes at least one of the following:
relevant identifier of a cell that triggers conditional handover;
handover event or events that trigger conditional handover;
a threshold value or values corresponding to handover event or events that trigger conditional handover;
network device that configures conditional handover for the UE;
a first time difference which is a difference between a moment when the UE receives the configuration information of the conditional handover and a moment when a handover event of the conditional handover is met;
relevant event information that the handover event or events that trigger the conditional condition is met;
a second time difference which is a difference between a moment when a handover event for triggering conditional handover corresponding to the PCell is met and a moment when a handover event for triggering conditional handover corresponding to the PSCell is met.

12. The method according to claim 11, further comprising:
receiving the first configuration information and the second configuration information of the conditional handover sent by the network device; wherein the first configuration information is configuration information used to indicate the first handover event that the target PCell needs to meet when performing the PCell conditional handover; the second configuration information is configuration information used to indicate the second handover event that PSCell needs to meet.

13. The method according to claim 12, wherein the first configuration information includes one or more candidate target PCells, a first handover event for triggering conditional handover corresponding to each candidate target PCell, and/or a threshold value corresponding to the first handover event; the second configuration information includes a second handover event for triggering conditional handover corresponding to the PSCell and/or a threshold value corresponding to the second handover event.

14. An information processing method, performed by a network device, comprising:
receiving first information sent by a user equipment (UE);
adjusting, according to the first information, configuration information of conditional handover configured for the UE;
wherein the first information includes at least one of the following:
relevant identifier of a cell that triggers conditional handover;
handover event or events that trigger conditional handover;
a threshold value or values corresponding to handover event or events that trigger conditional handover;
network device that configures conditional handover for the UE;
a first time difference which is a difference between a moment when the UE receives the configuration information of the conditional handover and a moment when a handover event of the conditional handover is met;
relevant event information that the handover event or events that trigger the conditional condition is met;
a second time difference which is a difference between a moment when a handover event for triggering conditional handover corresponding to the PCell is met and a moment when a handover event for triggering conditional handover corresponding to the PSCell is met.

15. The method according to claim 14, further comprising:
sending first configuration information and second configuration information of conditional handover to the UE; wherein the first configuration information is configuration information used to indicate the first handover event that the target PCell needs to meet when performing the PCell conditional handover, and the second configuration information is configuration information used to indicate the second handover event that PSCell needs to meet.

16. The method according to claim 15, wherein the first configuration information includes one or more candidate target PCells, the first handover event for triggering conditional handover corresponding to each candidate target PCell, and/or a threshold value corresponding to the first handover event; the second configuration information includes the second handover event for triggering conditional handover corresponding to the PSCell and/or a threshold value corresponding to the second handover event.

17. A conditional handover device, performed by a user equipment (UE) which is connected to a source primary cell (PCell) and a primary secondary cell (PSCell), comprising:
a handover module configured to, in a case where there is a target primary cell (PCell) that meets a first handover event and a PSCell that meets a second handover event, perform a conditional handover procedure from a source PCell to the target PCell.

18. An information transmission device, performed by a network device, comprising:
a first sending module configured to send first configuration information and second configuration information of conditional handover to a user equipment (UE); wherein the first configuration information is configuration information used to indicate a first handover event that a target PCell needs to meet when performing PCell conditional handover; the second configuration information is configuration information used to indicate a second handover event that a PSCell needs to meet.

19. An information transmission device, performed by a user equipment (UE), comprising:
a second sending module configured to send first information related to success or failure of conditional handover to a network device;
wherein the first information includes at least one of the following:
relevant identifier of cell that triggers conditional handover;
handover event or events that trigger conditional handover;
a threshold value or values corresponding to handover event or events that trigger conditional handover;
network device that configures conditional handover for the UE;
a first time difference which is a difference between a moment when the UE receives the configuration information of the conditional handover and a moment when a handover event of the conditional handover is met;
relevant event information that the handover event or events that trigger the conditional condition is met;
a second time difference which is a difference between a moment when a handover event for triggering conditional handover corresponding to the PCell is met and a moment when a handover event for triggering conditional handover corresponding to the PSCell is met.

20. An information processing device, performed by a network device, comprising:
a third receiving module configured to receive first information sent by a user equipment (UE);
a third processing module configured to adjust, according to the first information, configuration information of conditional handover configured for the UE;
wherein the first information includes at least one of the following:
relevant identifier of a cell that triggers conditional handover;
handover event or events that trigger conditional handover;
a threshold value or values corresponding to handover event or events that trigger conditional handover;
network device that configures conditional handover for the UE;
a first time difference which is a difference between a moment when the UE receives the configuration information of the conditional handover and a moment when a handover event of the conditional handover is met;
relevant event information that the handover event or events that trigger the conditional condition is met;
a second time difference which is a difference between a moment when a handover event for triggering conditional handover corresponding to the PCell is met and a moment when a handover event for triggering conditional handover corresponding to the PSCell is met.

21. A user equipment (UE) in connection with a source primary cell (PCell) and a primary secondary cell (PSCell), comprising: a processor and a transceiver; wherein the transceiver receives and sends data under control of the processor, and the processor is used to perform following actions:
in a case where there is a target primary cell (PCell) that meets a first handover event and a PSCell that meets a second handover event, performing a conditional handover procedure from the source PCell to the target PCell.

22. A network device, comprising a processor and a transceiver; wherein the transceiver receives and sends data under control of the processor, and the processor is used to perform following process:
sending, through transceiver, first configuration information and second configuration information of conditional handover to a user equipment (UE); wherein the first configuration information is configuration information used to indicate a first handover event that a target PCell needs to meet when performing PCell conditional handover; the second configuration information is configuration information used to indicate a second handover event that a PSCell needs to meet.

23. A user equipment (UE), comprising: a processor and a transceiver; wherein the transceiver receives and sends data under control of the processor, and the processor is used to perform following process:
sending, through transceiver, first information related to success or failure of conditional handover to a network device;
wherein the first information includes at least one of the following:
relevant identifier of cell that triggers conditional handover;
handover event or events that trigger conditional handover;
a threshold value or values corresponding to handover event or events that trigger conditional handover;
network device that configures conditional handover for the UE;
a first time difference which is a difference between a moment when the UE receives the configuration information of the conditional handover and a moment when a handover event of the conditional handover is met;
relevant event information that the handover event or events that trigger the conditional condition is met;
a second time difference which is a difference between a moment when a handover event for triggering conditional handover corresponding to the PCell is met and a moment when a handover event for triggering conditional handover corresponding to the PSCell is met.

24. A network device, comprising: a processor and a transceiver; wherein the transceiver receives and sends data under control of the processor, and the processor is used to perform following process:
receiving, through the transceiver, first information sent by a user equipment (UE);
adjusting, according to the first information, configuration information of conditional handover configured for the UE;
wherein the first information includes at least one of the following:
relevant identifier of cell that triggers conditional handover;
handover event or events that trigger conditional handover;
a threshold value or values corresponding to handover event or events that trigger conditional handover;
network device that configures conditional handover for the UE;
a first time difference which is a difference between a moment when the UE receives the configuration information of the conditional handover and a moment when a handover event of the conditional handover is met;
relevant event information that the handover event or events that trigger the conditional condition is met;
a second time difference which is a difference between a moment when a handover event for triggering conditional handover corresponding to the PCell is met and a moment when a handover event for triggering conditional handover corresponding to the PSCell is met.

25. A user equipment (UE), comprising: a memory, a processor, and a program stored on the memory and executable on the processor; wherein the processor executes the program to perform the conditional handover method according to any one of claims 1 to 7, or perform the information transmission method according to any one of claims 12 to 14.

26. A network device, comprising: a memory, a processor, and a program stored on the memory and executable on the processor; wherein the processor executes the program to perform the information transmission method according to any one of claims 8 to 11, or perform the information processing method according to any one of claims 15 to 17.

27. A computer-readable storage medium, comprising a computer program stored thereon; wherein the program, when executed by a processor, causes the processor to perform the steps in the conditional handover method according to any one of claims 1 to 6, or perform steps in the information transmission method according to any one of claims 7 to 10, or perform steps in the information transmission method according to any one of claims 11 to 13, or perform the information processing method according to any one of claims 14 to 16.
